# FASCICULE DE BREVET EUROPEEN

(11) **EP 3 247 615 B1**
(45) Date de publication et mention de la délivrance du brevet: **13.03.2019**
(21) Numéro de dépôt: 16703347.1
(22) Date de dépôt: 20.01.2016
(51) Int. Cl.: B62D 37/02, B62D 35/00

(54) **SYSTÈME AÉRODYNAMIQUE À GÉNÉRATEUR DE VORTEX ORIENTABLE**
AERODYNAMISCHES SYSTEM MIT AUSRICHTBAREM WIRBELGENERATOR
AERODYNAMIC SYSTEM WITH ORIENTABLE VORTEX GENERATOR

(30) Priorité: 21.01.2015 FR 1550483
(43) Date de publication de la demande: 29.11.2017
(73) Titulaire: Compagnie Plastic Omnium, 69007 Lyon (FR)
(72) Inventeur: GILOTTE, Philippe, 01470 Benonces (FR); EULALIE, Yoann, 69006 Lyon (FR)
(74) Mandataire: Andrieux, Benoît
(86) Numéro de dépôt international: PCT/FR2016/050105
(87) Numéro de publication internationale: WO 2016/116698

(56) Documents cités:
- EP-A1- 1 873 044
- CN-U- 201 520 349
- FR-A1- 2 896 758
- FR-A1- 2 931 440

## Description

La présente invention concerne un système aérodynamique pour véhicule automobile.

Les véhicules automobiles en mouvement sont soumis à différents efforts qui s'opposent à leur avancement. Ces efforts sont en particulier les forces de frottements solides, au contact des roues avec le sol, et les forces aérodynamiques, dues pour partie, aux frottements de l'air sur les parois de la carrosserie du véhicule, et pour une autre partie, au valeur de pression exercées principalement à l'avant et à l'arrière du véhicule.

A haute vitesse, ces forces aérodynamiques deviennent dominantes par rapport aux autres et jouent un rôle important sur la consommation énergétique du véhicule. Une partie des forces aérodynamiques est générée par les dépressions créées par les décollements, les recirculations et les tourbillons longitudinaux de l'air à l'arrière du véhicule.

C'est pour cette raison que les véhicules automobiles sont généralement équipés de systèmes aérodynamiques visant à faciliter l'écoulement de l'air près des pièces de carrosserie du véhicule, plus précisément à éviter les turbulences qui engendrent une déperdition d'énergie et donc, une augmentation de la consommation d'énergie du véhicule.

On sait que ces turbulences peuvent être générées dans des régions de décollement marquées par des ruptures d'incidence de pièces de carrosserie du véhicule. Ces ruptures, également appelées bords de fuite ou ligne de décollement, correspondent à des ruptures de forme de la pièce (changement de galbe, forme en saillie, fin de pièce) qui conduisent à des ruptures d'incidence de l'écoulement d'air par rapport à la paroi. Ces régions de décollement génèrent, en aval, des zones tourbillonnaires dans lesquelles une dépression se crée lorsque le véhicule roule. Cette zone tourbillonnaire comprend une couche de cisaillement et un tourbillon principal de retour. De telles zones se trouvent par exemple au voisinage de l'extrémité supérieure arrière du véhicule, formée par le raccord transversal entre le pavillon et le haut du hayon, ou encore au voisinage des montants de baie arrière ou en partie basse du parechoc arrière ou au niveau des crosses de parechoc arrière. Des zones tourbillonnaires ou de dépression peuvent également se trouver au voisinage de l'extrémité supérieure avant du véhicule, formée par le raccord transversal entre le pavillon et le haut du pare-brise, au voisinage des montants de baie avant, des ailes avant ou arrière, ou encore des pièces de carrosserie entourant les passages de roue avant ou arrière.

Pour améliorer l'écoulement d'air dans ces zones tourbillonnaires, notamment à l'arrière du véhicule, on cherche à affiner ou prolonger ces bords de fuite, en adaptant la forme du hayon ou du pavillon. Les systèmes classiques sont essentiellement constitués par des becquets, des ailerons ou des déflecteurs placés dans ces zones à l'arrière du véhicule.

Toutefois, de telles pièces ne font pas disparaître totalement les turbulences, et sont relativement contraignantes du point de vue esthétique.

On connaît également, du document EP1740442B par exemple, des dispositifs aérodynamiques qui sont constitués par une ou plusieurs ailettes formant au moins un générateur de vortex et généralement disposées en amont d'une ligne de décollement d'un élément de la carrosserie du véhicule automobile. Ces ailettes sont le plus souvent déplaçables entre une position escamotée et une position en saillie dans laquelle elles agissent sur les structures tourbillonnaires générées autour des éléments de carrosserie du véhicule.

Cependant, de tels dispositifs se heurtent à des problèmes d'encombrement, d'aspect et d'intégration sur les éléments de carrosserie. Par exemple, les ailettes doivent impérativement être escamotées dans certaines conditions, ce qui impose des solutions techniques complexes de mobilité des ailettes.

De plus, si ces systèmes à ailettes sont bien adaptés lorsque l'angle de la région de décollement est faible, ils ne le sont pas lorsque cet angle est fort. Cet angle est l'angle défini par la rupture de forme de la pièce de carrosserie, par exemple l'angle formé entre le pavillon et la lunette arrière.

On connaît également, du document EP 1 873 044 par exemple, un système aérodynamique pour limiter les pertes dans la couche de cisaillement, sans pour autant imposer de formes spéciales aux pièces de carrosserie. Un tel système comprend des moyens électromécaniques agencés au voisinage d'une région de décollement du véhicule. Ces moyens sont aptes à transformer de l'électricité en ondes de pression permettant la création d'un jet d'air périodique. Ce jet permet la réduction des structures produites dans la couche de cisaillement et diminuer l'intensité du tourbillon produit en aval.

Cependant, une telle solution nécessite un positionnement très précis pour être efficace, et s'adapte difficilement à différents types de véhicules et/ou à différentes vitesses de roulage du véhicule.

L'invention a pour but de remédier à ces inconvénients en fournissant un système aérodynamique plus efficace, sans pour autant imposer de formes spéciales aux pièces de carrosserie, tout en conservant une efficacité quelle que soit l'angle de la région de décollement d'air.

Ainsi, l'objet de l'invention concerne un système aérodynamique pour véhicule automobile, comprenant au moins un générateur de vortex par création d'un jet d'air périodique, apte à être disposé en aval d'au moins une région de décollement d'au moins un élément de carrosserie d'un véhicule, générant une zone tourbillonnaire comportant une couche de cisaillement et un tourbillon principal de retour. Le générateur de vortex comprend au moins une buse orientable apte à générer des tourbillons se déplaçant selon une direction définie, vers la couche de cisaillement et le tourbillon principal de retour, dans un plan différent de la couche de cisaillement.

Le système selon l'invention peut être positionné sur toute pièce de carrosserie du véhicule, et sur tout type de véhicule. Ce système est par ailleurs adapté lorsque l'angle de la région de décollement est fort.

Selon l'invention, la buse orientable peut être apte à générer des tourbillons entrainés par le tourbillon principal.

La buse orientable est de préférence apte à diriger le jet d'air au niveau, ou sensiblement en amont, de l'intersection entre la couche de cisaillement et le tourbillon principal de retour.

Selon un mode de réalisation, la buse orientable comporte un moyen de rotation autours d'un axe sensiblement parallèle à la largeur de la couche de cisaillement.

Avantageusement, la buse orientable comporte au moins une fente d'où sort un jet d'air apte à générer lesdits tourbillons, les dimensions et/ou la forme de ladite fente étant définies en fonction de la structure de la couche de cisaillement pour une vitesse donnée du véhicule.

La buse orientable peut être orientable de façon à s'adapter à un type de véhicule. La buse orientable peut également être orientable de façon à s'adapter en cours de roulement à un changement de vitesse dudit véhicule ou de l'assiette du véhicule. La buse orientable peut également être adaptée à générer des jets d'air périodiques par oscillation autour d'une direction choisie.

Selon l'invention, le générateur de vortex peut comporter un moyen vibratoire apte à envoyer périodiquement de l'air dans un diffuseur, sur lequel la buse orientable est montée articulée, le diffuseur étant rendu étanche au moyen d'une coque venant fermer le diffuseur.

De préférence, le générateur de vortex est apte à générer un jet d'air à une fréquence sensiblement supérieure à la fréquence principale de transport des tourbillons dans la couche de cisaillement.

Selon un exemple de réalisation, le moyen vibratoire comprend des moyens électromécaniques aptes à transformer de l'électricité en ondes vibratoires. Ces moyens électromécaniques peuvent comprendre un film surmoulé dans une pièce de carrosserie du véhicule.

Avantageusement, le système peut comporter un organe de pilotage de la vitesse du jet d'air en sortie de buse, de la fréquence à laquelle le jet d'air est généré et de l'orientation du jet d'air en sortie de buse.

Selon un exemple de réalisation, le système peut comporter un ensemble de buses, les dimensions de chaque fente des buses et/ou le nombre de buses orientables étant définis en fonction de la structure de la couche de cisaillement pour une vitesse donnée du véhicule.

L'invention concerne également un ensemble d'une pièce de carrosserie de véhicule automobile et d'au moins un système aérodynamique selon l'invention.

La pièce de carrosserie est de préférence agencée dans une région de rupture d'incidence du véhicule.

La pièce de carrosserie peut être choisie parmi un ensemble comprenant un montant de baie avant ou arrière, un rétroviseur, un toit, un hayon, un becquet arrière, une aile, une pièce extérieure entourant les roues telle qu'un pare-boue ou une extension d'aile.

Enfin, l'ensemble selon l'invention peut comporter un ensemble de système aérodynamique.

L'invention sera mieux comprise à la lecture des figures annexées, qui sont fournies à titre d'exemples et ne présentent aucun caractère limitatif, dans lesquelles :
La figure 1 est un schéma d'un mode de réalisation du système aérodynamique selon l'invention et de son fonctionnement.
La figure 2 schématise les écoulements d'air au niveau d'un becquet arrière d'un véhicule automobile.
La figure 3 illustre le fonctionnement du système aérodynamique selon l'invention au niveau d'un becquet arrière d'un véhicule automobile.
La figure 4 illustre un exemple de réalisation du système aérodynamique selon l'invention.
Les figures 5A et 5B montrent une section d'un exemple de réalisation du système aérodynamique selon l'invention. Dans la figure 5B, la buse est orientée d'un angle de 30° par rapport à la buse de la figure 5A.

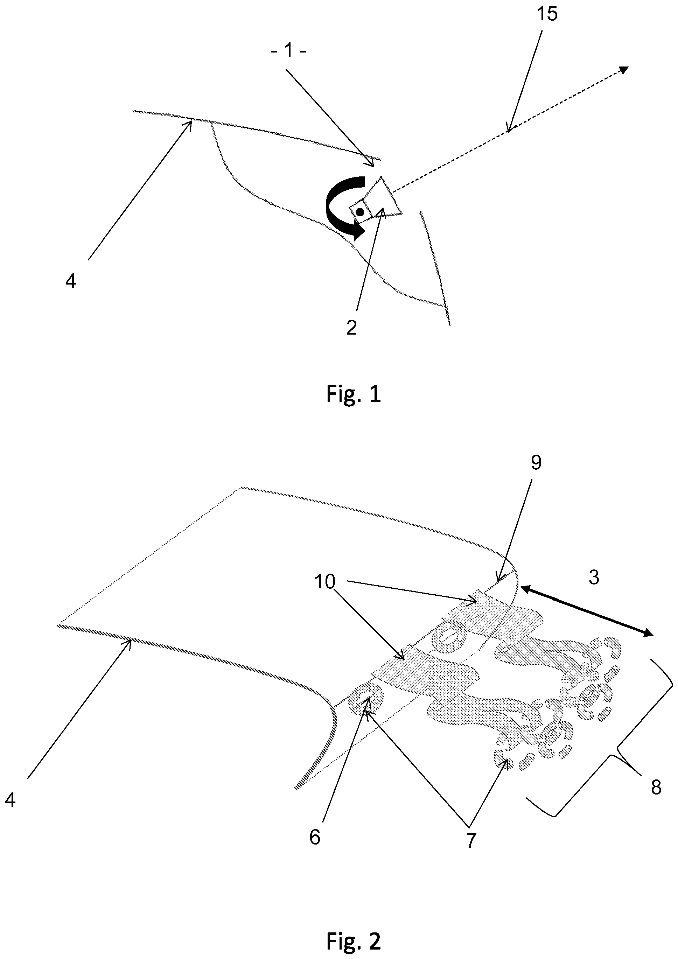

On se réfère maintenant aux figures 1, 2 et 3, qui illustrent un exemple de système aérodynamique (1) pour véhicule automobile selon l'invention, ainsi que son fonctionnement.

Ce système (1) comprend au moins un générateur de vortex (2) par création d'un jet d'air (15) périodique apte à être disposé en aval d'au moins une région de décollement (9) d'au moins un élément de carrosserie (4) d'un véhicule. Cette région de décollement génère en aval (dans le sens de l'écoulement d'air, c'est-à-dire de l'avant du véhicule vers l'arrière du véhicule), une zone tourbillonnaire (3) comportant une couche de cisaillement (8) et un tourbillon principal (5) de retour. Le générateur de vortex (2) comprend au moins une buse orientable (6) apte à générer des tourbillons (7) en direction de la couche de cisaillement (8) et du tourbillon principal (5) de retour, dans un plan différent de la couche de cisaillement (8) (dans un plan incident à la couche de cisaillement).

On entend par « jets d'air périodique » un ensemble de jets qui sont générés, où dont la vitesse varie, dans le temps avec une fréquence donnée. La création d'un jet d'air peut se faire par soufflage uniquement, par aspiration uniquement, par soufflage et aspiration, ou par oscillation, c'est-à-dire par variation de l'angle d'orientation de la buse (on parle de buse oscillante autours d'une position donnée). Ainsi, le générateur de vortex (2) est adapté à créer périodiquement un jet d'air, en réalisant une succession de soufflage, ou d'aspiration, ou une combinaison périodique de soufflage et d'aspiration.

En se référant à la figure 2, on décrit la circulation de l'air à l'arrière d'un véhicule en mouvement.

L'air subit un décollement au niveau d'une région de décollement (9), telle que le becquet arrière par exemple. Suite à ce décollement, se forment des nappes d'air (10) cisaillées qui s'étendent vers l'arrière du véhicule. Ces nappes (10) forment une couche de cisaillement (8) car la vitesse de l'air (v+) dans le haut de la couche est supérieure à la vitesse de l'air (v-) dans le bas de la couche.

Sous cette couche de cisaillement (8), se crée une dépression à l'origine d'un tourbillon principal de retour (5).

A une certaine distance de la région de décollement (9), des tourbillons (11) apparaissent dans la couche de cisaillement (8) du fait des différences de vitesse (v+, v-). Ces tourbillons (11) déstructurent alors les nappes d'air cisaillées (10), ce qui limite la chute de pression dans le tourbillon principal de retour (5).

Les nappes (10) interagissent avec le tourbillon principal de retour (5), créant une baisse de pression dans ce tourbillon central (5). Lorsque la pression dans le tourbillon principal de retour (5) est faible, les forces aérodynamiques à l'arrière du véhicule augmentent, et donc, la consommation du véhicule augmente. On cherche donc à augmenter la pression du tourbillon principal de retour (5).

Pour ce faire, on souhaite déstructurer au plus tôt, c'est-à-dire au plus proche de la région de décollement (9), les nappes d'air (10). En d'autres termes, on souhaite déstructurer les nappes d'air (10) en amont de la formation des tourbillons (11) dans la couche de cisaillement (8).

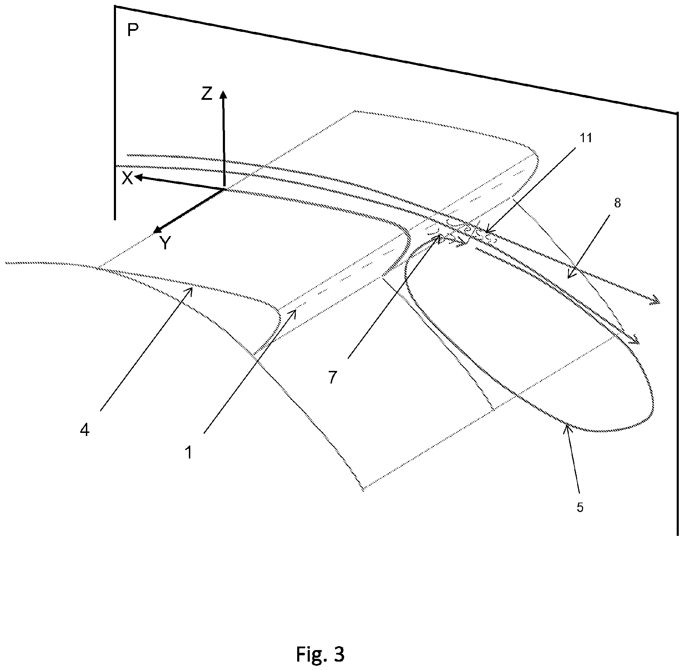

Pour ce faire, et comme l'illustrent la figure 3, on utilise le système (1) selon l'invention, en le réglant de façon à générer des tourbillons (7) dans le sens de l'écoulement d'air sur le véhicule, c'est-à-dire vers l'arrière du véhicule, en direction, à la fois de la couche de cisaillement (8) et du tourbillon principal (5) de retour, dans un plan différent des tourbillons créé dans la couche de cisaillement (8).

Si l'on considère que la couche de cisaillement (8) circule selon une direction x, et possède une largeur dans une direction y, alors la buse (6) est orientable par rotation autour d'un axe sensiblement parallèle à la direction y. La buse (6) peut également être orientable par rotation autour d'un axe z sensiblement perpendiculaire aux axes x et y. Selon l'exemple des figures 1 à 4, la buse (6) est orientable autours d'un axe sensiblement en Y du véhicule.

Le système (1) selon l'invention permet de générer un jet d'air (15) dans et autour d'une direction optimale définie, autour duquel des tourbillons (7) vont se former. Ces tourbillons (7) se déplacent selon cette direction optimale. Cette direction optimale permet de rendre le système plus efficace que les systèmes antérieurs.

Une direction optimale est une direction permettant aux tourbillons (7) générés autours du jet d'air (15) sortant de la buse, et se déplaçant le long de ce jet d'air (15), d'être entrainés par le tourbillon principal (5) de retour.

Par ailleurs il est préférable que ces tourbillons (7) pénètrent rapidement dans la couche de cisaillement (8), plutôt que d'être entrainés sur une grande partie du tourbillon principal (5).

De ce fait, la direction optimale est de préférence la direction selon laquelle le jet d'air (15) arrive au niveau, ou légèrement en amont, de l'intersection entre la couche de cisaillement (8) et le tourbillon principal (5) de retour.

Selon les conditions de roulage, le jet d'air (15) suivant la direction optimale arrive de façon tangentielle à la couche de cisaillement (8). Selon d'autres conditions de roulage, le jet d'air (15) suivant la direction optimale coupe la couche de cisaillement (8).

Pour améliorer davantage l'efficacité du système (1), le système (1) permet de générer des structures (tourbillons (7) ou ensemble de tourbillons) dont la forme et la fréquence de génération permettent de mieux déstructurer la couche de cisaillement (8). L'optimisation de ces structures (tourbillons ou ensemble de tourbillons) se fait en modifiant la taille des buses et/ou le nombre des buses, ainsi que la fréquence de génération des jets d'air.

La buse orientable (6) comporte une fente d'où sort un jet d'air (15) apte à générer les tourbillons en direction de la couche de cisaillement (8). Une fente est un orifice de forme généralement oblongue. La fente comporte plusieurs dimensions. On appelle longueur de fente la plus grande de ces dimensions.

Les dimensions de cette fente sont définies en fonction de la structure de la couche de cisaillement (8). Plus précisément, les dimensions, et particulièrement la longueur, de la fente sont définies en fonction de la fréquence et de la taille des tourbillons (11) générés et transportés dans l'épaisseur de la couche de cisaillement (8) en aval de la ligne de décollement (9), et pour une vitesse donnée du véhicule. Selon les exemples illustrés sur les figures, les fentes sont parallèles à l'axe Y du véhicule. Selon d'autres modes de réalisation, les fentes peuvent avoir d'autres orientations. Elles peuvent notamment être parallèles à l'axe Z du véhicule.

De préférence, le système (1) comporte plusieurs buses orientables (6). Dans ce cas, les dimensions de chaque fente des buses (6) et/ou le nombre de buses orientables (6) sont définis en fonction de la fréquence des tourbillons (11) dans la couche de cisaillement (8) et de l'épaisseur (dans la direction sensiblement en Z du véhicule) de la couche de cisaillement (8) juste en aval de la ligne de décollement (9), et pour une vitesse donnée du véhicule.

Le nombre de système (1) est également fonction de la dimension du système (1) selon l'axe Y du véhicule et la forme et la dimension de la pièce de carrosserie (4), donc de la largeur de la couche de cisaillement (8). En effet, il peut être nécessaire, pour suivre le galbe de la pièce de carrosserie (4) de multiplier les systèmes (1). Le nombre de systèmes est alors un compromis entre la réduction de dimension du système (1) et le nombre de système (complexité d'assemblage et coûts). On peut par exemple utiliser plusieurs systèmes de 4cm pour épouser le galbe d'un becquet de 2m de largeur.

Par exemple, plus la fréquence des tourbillons est grande, plus la fente sera grande et/ou plus le système (1) comportera de buses (6), et plus l'épaisseur de la couche de cisaillement est importante plus la fente sera grande et/ou plus le système (1) comportera de buses (6).

Ainsi, chaque buse (6) est non seulement orientable, mais également, du fait de l'adaptation des dimensions et de la forme de la fente, adaptée à la largeur du décollement, et à la structure de la couche de cisaillement (8).

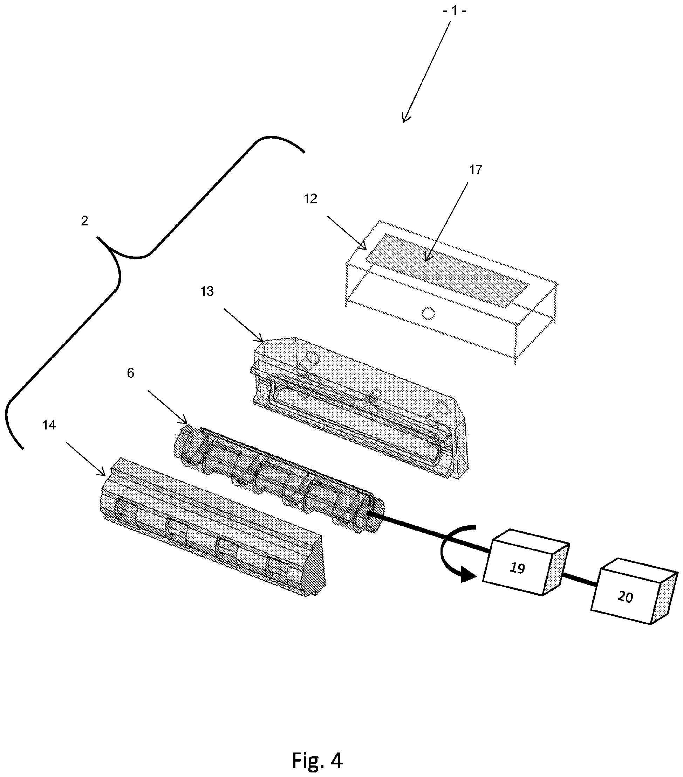

Selon le mode de réalisation de la figure 4, le générateur de vortex (2) comporte un moyen vibratoire (12) apte à envoyer périodiquement de l'air dans un diffuseur (13), sur lequel la buse orientable (6) est montée mobile en rotation entre deux positions angulaires, une position minimale et une position maximale. L'ensemble constitué par le diffuseur (13) et la coque (14) constituent un boitier étanche autour de la buse.

Le moyen vibratoire (12) est apte à générer des jets d'air (15) à une fréquence donnée, par exemple à la fréquence à laquelle apparaissent les tourbillons (11) dans la couche de cisaillement (8). Des tourbillons (7) sont alors générés autour du jet d'air (15), dans la direction du jet d'air (15).

Selon un mode de réalisation, le moyen vibratoire (12) comprend des moyens électromécaniques aptes à transformer de l'électricité en ondes vibratoires. De préférence, ces moyens électromécaniques comprennent un film (17) surmoulé dans une pièce de carrosserie du véhicule ou dans un boitier apte à être intégré dans cette pièce.

Les moyens électromécaniques comprennent par exemple un haut-parleur (18). Ils peuvent également comprendre des moyens piézoélectriques, par exemple un film piézoélectrique en matière plastique surmoulé dans une pièce de carrosserie ou dans un boitier séparé.

Les moyens électromécaniques peuvent être obtenus par surmoulage d'un film semi-conducteur.

Les moyens électromécaniques peuvent comprendre des polymères électro-actifs, de préférence sous forme d'un film élastomère diélectrique surmoulé dans la pièce de carrosserie.

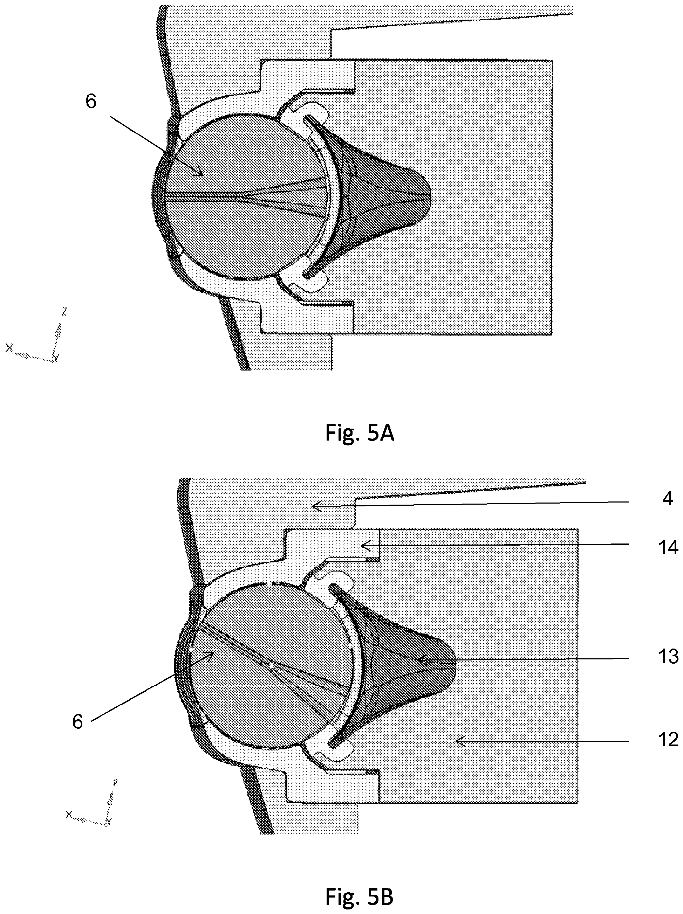

La buse orientable (6) est actionnée angulairement par un moyen de rotation (19) autour d'un axe sensiblement en Y du véhicule, et éventuellement en Z. Ce moyen de rotation (19) permet d'incliner la buse (6) par rapport à la couche de cisaillement (8) et du tourbillon principal (5) de retour, dans une gamme d'angles prédéfinis. La gamme d'angles (voir figure 1) permet d'orienter le jet d'air (15) selon la direction optimale précédemment définie. Les figures 5A et 5B montrent une section d'un exemple de réalisation du système aérodynamique selon l'invention. Dans la figure 5B, la buse est orientée d'un angle de 30° par rapport à la buse de la figure 5A.

Selon un mode de réalisation, le système (1) comporte un organe de pilotage (20) de la vitesse du jet d'air (15) en sortie de buse (6), de la fréquence à laquelle le jet d'air (15) est généré et de l'orientation du jet d'air (15) en sortie de buse.

La vitesse et la fréquence permettent de gérer la structure et la taille des tourbillons(7).

L'organe de pilotage (20) peut fonctionner selon au moins l'un des modes suivants :
Selon un premier mode de réalisation, l'angle d'orientation de la buse (6), la fréquence de génération des jets d'air (15), et la vitesse des jets d'air (15) du système (1) sont prédéterminés et préréglés pour une configuration donnée d'un véhicule donné. On peut par exemple utiliser la configuration correspondant à la vitesse maximale du mode de fonctionnement économique. Le système (1) n'est par la suite plus réglable, il est dit statique, par opposition au mode dynamique ci-après.
Selon un second mode de réalisation, le système (1) est dynamique, au sens où l'angle d'orientation de la buse (6) et la fréquence de génération des jets d'air (15) et la vitesse des jets d'air (15) peuvent changer en fonction de l'utilisation du véhicule. La programmation permettant de telles modifications peut être préétablie en développement, par des essais de roulage dans différentes configuration permettant l'établissement de lois de comportement.
Selon un troisième mode de réalisation, le système (1) est intelligent : il se paramètre seul en fonction du type de véhicule, du style de conduite et des conditions de roulement. Ainsi, l'inclinaison de la buse (6) est réglée en cours de roulement, de façon à ce que les jets d'air (15) soient toujours orientés selon la direction optimale. La buse (6) s'adapte donc à un changement de vitesse du véhicule par exemple. La vitesse du jet d'air (15) et la fréquence des jets d'air (15) sont également définies à chaque variation des conditions de roulement, telle que l'assiette du véhicule.

En somme, le système aérodynamique (1) selon l'invention comporte différents moyens de réglages permettant de déstructurer au plus proche de la ligne de décollement la couche de cisaillement (8) :
- l'orientation de la buse (fonctionnement statique, dynamique ou par oscillation autours d'une direction optimale) ;
- l'orientation de la fente de la buse ;
- la forme de la fente, dont ses dimensions ;
- la vitesse du jet d'air ;
- la fréquence du jet d'air.

L'invention concerne également un ensemble (21) d'une pièce de carrosserie (4) de véhicule automobile et d'un système aérodynamique (1) selon l'invention.

La pièce de carrosserie (4) est agencée dans une zone de rupture d'incidence du véhicule et est de préférence choisie parmi un ensemble comprenant : un montant de baie avant ou arrière, un rétroviseur, un toit, un hayon, un becquet arrière, une aile, une pièce extérieure entourant les roues telle qu'un pare-boue ou une extension d'aile.

Selon un mode de réalisation préféré, l'ensemble (21) comporte plusieurs systèmes (1) selon l'invention, positionnés de façon discontinue, et dont le nombre dépend du rayon de courbure de la région de décollement (9).

Selon un exemple, la pièce de carrosserie (4) est un becquet arrière, et les systèmes aérodynamiques (1) sont répartis sur toute la largeur du véhicule sur le becquet.

## Revendications

1. Système aérodynamique (1) pour véhicule automobile, comprenant au moins un générateur de vortex (2) par création d'un jet d'air périodique (15) apte à être disposé en aval d'au moins une région de décollement (9) d'au moins un élément de carrosserie (4) d'un véhicule, ladite région de décollement (9) générant une zone tourbillonnaire (3) comportant une couche de cisaillement (8) et un tourbillon principal (5) de retour, **caractérisé en ce que** ledit générateur de vortex (2) comprend au moins une buse orientable (6) apte à générer des tourbillons (7) se déplaçant selon une direction définie vers la couche de cisaillement (8) et le tourbillon principal (5) de retour, dans un plan différent de la couche de cisaillement (8).

2. Système (1) selon la revendication 1, dans lequel la buse orientable (6) est apte à générer des tourbillons (7) entrainés par le tourbillon principal (5).

3. Système (1) selon l'une des revendications précédentes, dans lequel la buse orientable (6) est apte à diriger le jet d'air (15) au niveau, ou sensiblement en amont, de l'intersection entre la couche de cisaillement (8) et le tourbillon principal (5) de retour.

4. Système (1) selon l'une des revendications précédentes, dans lequel la buse orientable (6) comporte un moyen de rotation (19) autours d'un axe sensiblement parallèle à la largeur de la couche de cisaillement (8).

5. Système (1) selon l'une des revendications précédentes, dans lequel la buse orientable (6) comporte au moins une fente d'où sort un jet d'air apte à générer lesdits tourbillons (7), les dimensions et/ou la forme de ladite fente étant définies en fonction de la structure de la couche de cisaillement (8) pour une vitesse donnée du véhicule.

6. Système (1) selon l'une des revendications précédentes, dans lequel la buse orientable (6) est orientable de façon à s'adapter à un type de véhicule.

7. Système (1) selon l'une des revendications précédentes, dans lequel la buse orientable (6) est orientable de façon à s'adapter en cours de roulement à un changement de vitesse dudit véhicule ou de l'assiette du véhicule.

8. Système (1) selon l'une des revendications précédentes, dans lequel la buse orientable (6) est adaptée à générer des jets d'air (15) périodiques par oscillation autour d'une direction choisie.

9. Système (1) selon l'une des revendications précédentes, dans lequel le générateur de vortex (2) comporte un moyen vibratoire (12) apte à envoyer périodiquement de l'air dans un diffuseur (13), sur lequel la buse orientable (6) est montée articulée, le diffuseur étant rendu étanche au moyen d'une coque (14) venant fermer le diffuseur (13).

10. Système (1) selon l'une des revendications précédentes, dans lequel le générateur de vortex (2) est apte à générer un jet d'air (15) à une fréquence sensiblement supérieure à la fréquence principale de transport des tourbillons dans la couche de cisaillement (8).

11. Système (1) selon l'une des revendications 9 et 10, dans lequel le moyen vibratoire (12) comprend des moyens électromécaniques aptes à transformer de l'électricité en ondes vibratoires.

12. Système (1) selon la revendication 11, dans lequel les moyens électromécaniques comprennent un film (17) surmoulé dans une pièce (4) de carrosserie du véhicule.

13. Système (1) selon l'une des revendications précédentes, comportant un organe de pilotage (20) de la vitesse du jet d'air (15) en sortie de buse (6), de la fréquence à laquelle le jet d'air (15) est généré et de l'orientation du jet d'air (15) en sortie de buse.

14. Système (1) selon l'une des revendications précédentes, comportant un ensemble de buses (6), les dimensions de chaque fente des buses (6) et/ou le nombre de buses orientables (6) étant définis en fonction de la structure de la couche de cisaillement (8) pour une vitesse donnée du véhicule.

15. Ensemble (21) d'une pièce de carrosserie (4) de véhicule automobile et d'au moins un système aérodynamique (1) selon l'une quelconque des revendications 1 à 14.

16. Ensemble selon la revendication 15, dans lequel la pièce de carrosserie (4) est agencée dans une région (9) de rupture d'incidence du véhicule.

17. Ensemble selon la revendication 16, dans lequel la pièce de carrosserie (4) est choisie parmi un ensemble comprenant un montant de baie avant ou arrière, un rétroviseur, un toit, un hayon, un becquet arrière, une aile, une pièce extérieure entourant les roues telle qu'un pare-boue ou une extension d'aile.

18. Ensemble selon l'une des revendications 16 à 18, comportant un ensemble de système aérodynamique (1).

## Patentansprüche

1. Aerodynamisches System (1) für Kraftfahrzeug, umfassend mindestens einen Vortexgenerator (2) durch Erzeugung eines periodischen Luftstrahls (15), der in der Lage ist, stromabwärts mindestens einer Ablösungszone (9) mindestens eines Karosserieelements (4) eines Fahrzeugs angeordnet zu werden, wobei die Ablösungszone (9) eine Verwirbelungszone (3) mit einer Scherschicht (8) und einer Haupt-Rückverwirbelung (5) erzeugt, **dadurch gekennzeichnet**, der Vortexgenerator (2) mindestens eine drehbare Düse (6) umfasst, die in der Lage ist, Verwirbelungen (7) zu erzeugen, die sich in einer definierten Richtung zu der Scherschicht (8) und der Haupt-Rückverwirbelung (5) hin bewegen, in einer von der Scherschicht (8) verschiedenen Ebene.

2. System (1) nach Anspruch 1, wobei die drehbare Düse (6) in der Lage ist, Verwirbelungen (7) zu erzeugen, die durch die Haupt-Rückverwirbelung (5) angetrieben werden.

3. System (1) nach einem der vorhergehenden Ansprüche, wobei die drehbare Düse (6) in der Lage ist, den Luftstrahl (15) im Bereich, oder im Wesentlichen stromaufwärts, des Schnittpunkts zwischen der Scherschicht (8) und der Haupt-Rückverwirbelung (5) zu lenken.

4. System (1) nach einem der vorhergehenden Ansprüche, wobei die drehbare Düse (6) mindestens ein Mittel zur Drehung (19) um eine Achse aufweist, die zu der Breite der Scherschicht (8) im Wesentlichen parallel ist.

5. System (1) nach einem der vorhergehenden Ansprüche, wobei die drehbare Düse (6) mindestens einen Schlitz aufweist, aus dem ein Luftstrahl austritt, der in der Lage ist, die Verwirbelungen (7) zu erzeugen, wobei die Abmessungen und/oder die Form des Schlitzes in Abhängigkeit von der Struktur der Scherschicht (8) bei einer bestimmten Geschwindigkeit des Fahrzeugs definiert sind.

6. System (1) nach einem der vorhergehenden Ansprüche, wobei die drehbare Düse (6) so drehbar ist, dass sie sich an einen Fahrzeugtyp anpasst.

7. System (1) nach einem der vorhergehenden Ansprüche, wobei die drehbare Düse (6) so drehbar ist, dass sie sich beim Rollen an eine Änderung der Geschwindigkeit des Fahrzeugs oder des Fahrwerks des Fahrzeugs anpasst.

8. System (1) nach einem der vorhergehenden Ansprüche, wobei die drehbare Düse (6) in der Lage ist, periodische Luftstrahlen (15) durch Oszillation um eine gewählte Richtung zu erzeugen.

9. System (1) nach einem der vorhergehenden Ansprüche, wobei der Vortexgenerator (2) ein Vibrationsmittel (12) aufweist, das in der Lage ist, periodisch Luft in ein Zerstäuberelement (13) zu leiten, an dem die drehbare Düse (6) angelenkt ist, wobei das Zerstäuberelement mittels einer Schale (14) abgedichtet wird, die das Zerstäuberelement (13) verschließt.

10. System (1) nach einem der vorhergehenden Ansprüche, wobei der Vortexgenerator (2) in der Lage ist, einen Luftstrahl (15) mit einer Frequenz zu erzeugen, die im Wesentlichen höher ist als die Haupttransportfrequenz der Verwirbelungen in der Scherschicht (8).

11. System (1) nach einem der Ansprüche 9 und 10, wobei das Vibrationsmittel (12) elektromechanische Mittel umfasst, die in der Lage sind, Elektrizität in Vibrationswellen umzuwandeln.

12. System (1) nach Anspruch 11, wobei die elektromechanischen Mittel eine Folie (17) umfassen, die in einem Karosserieteil (4) des Fahrzeugs aufgeformt ist.

13. System (1) nach einem der vorhergehenden Ansprüche, mit einem Organ zum Steuern (20) der Geschwindigkeit des Luftstrahls (15) am Ausgang der Düse (6), der Frequenz (15), mit welcher der Luftstrahl (15) erzeugt wird, und der Ausrichtung des Luftstrahls (15) am Ausgang der Düse.

14. System (1) nach einem der vorhergehenden Ansprüche, mit einer Düsenanordnung (6), wobei die Abmessungen jedes Schlitzes der Düsen (6) und/oder die Anzahl an drehbaren Düsen (6) in Abhängigkeit von der Struktur der Scherschicht (8) bei einer bestimmten Geschwindigkeit des Fahrzeugs definiert sind.

15. Anordnung (21) aus einem Kraftfahrzeug-Karosserieteil (4) und mindestens einem aerodynamischen System (1) nach einem der Ansprüche 1 bis 14.

16. Anordnung nach Anspruch 15, wobei das Karosserieteil (4) in einem Sollbruchbereich (9) des Fahrzeugs angeordnet ist.

17. Anordnung nach Anspruch 16, wobei das Karosserieteil (4) ausgewählt ist aus einer Anordnung umfassend eine A-Säule oder eine C-Säule, einen Rückspiegel, ein Dach, eine Heckklappe, einen Heck-Spoiler, einen Kotflügel, ein Außenteil, das die Räder umgibt, wie ein Schmutzfänger oder eine Kotflügelverbreiterung.

18. Anordnung nach einem der Ansprüche 16 bis 18, mit einer aerodynamischen Systemanordnung (1).

## Claims

1. Aerodynamic system (1) for motor vehicle, comprising at least one vortex generator (2) which is able to generate a vortex by creating a periodic air jet (15) and is able to be positioned downstream of at least one boundary layer separation region (9) of at least one bodywork element (4) of a vehicle, said boundary layer separation region (9) generating a turbulent zone (3) comprising a shear layer (8) and a main returning vortex (5), **characterised in that** said vortex generator (2) comprises at least one orientable nozzle (6) able to generate vortices (7) moving in a defined direction toward the shear layer (8) and the main returning vortex (5), in a plane different from the shear layer (8).

2. System (1) according to claim 1, wherein the orientable nozzle (6) is able to generate vortices (7) entrained by the main vortex (5).

3. System (1) according to one of the preceding claims, wherein the orientable nozzle (6) is able to direct the air jet (15) at, or substantially upstream of, the intersection between the shear layer (8) and the main returning vortex (5).

4. System (1) according to one of the preceding claims, wherein the orientable nozzle (6) comprises a means of rotation (19) about an axis substantially parallel to the width of the shear layer (8).

5. System (1) according to one of the preceding claims, wherein the orientable nozzle (6) comprises at least one slot from which an air jet able to generate said vortices (7) exits, the dimensions and/or shape of said slot being defined according to the structure of the shear layer (8) for a given vehicle speed.

6. System (1) according to one of the preceding claims, wherein the orientable nozzle (6) is orientable so as to adapt to a particular vehicle type.

7. System (1) according to one of the preceding claims, wherein the orientable nozzle (6) is orientable so as to adapt when driving to a change in the speed or attitude of said vehicle.

8. System (1) according to one of the preceding claims, wherein the orientable nozzle (6) is adapted to generate periodic air jets (15) by oscillation around a chosen direction.

9. System (1) according to one of the preceding claims, wherein the vortex generator (2) comprises a vibrating means (12) able to periodically send air into a diffuser (13), on which the orientable nozzle (6) is mounted pivotally, the diffuser being sealed by means of a shell (14) which closes the diffuser (13).

10. System (1) according to one of the preceding claims, wherein the vortex generator (2) is able to generate an air jet (15) at a frequency substantially greater than the main transport frequency of the vortices in the shear layer (8).

11. System (1) according to claim 9 or 10, wherein the vibrating means (12) comprises electromechanical means able to convert electricity into vibrating waves.

12. System (1) according to claim 11, wherein the electromechanical means comprise an overmoulded film (17) in a bodywork part (4) of the vehicle.

13. System (1) according to one of the preceding claims, comprising a member (20) for controlling the speed of the air jet (15) at the outlet of the nozzle (6), the frequency at which the air jet (15) is generated and the orientation of the air jet (15) at the outlet of the nozzle.

14. System (1) according to one of the preceding claims, comprising a set of nozzles (6), the dimensions of each slot in the nozzles (6) and/or the number of orientable nozzles (6) being defined according to the structure of the shear layer (8) for a given vehicle speed.

15. Assembly (21) of a motor vehicle bodywork part (4) and at least one aerodynamic system (1) according to any one of claims 1 to 14.

16. Assembly according to claim 15, wherein the bodywork part (4) is arranged in a region (9) of incidence break of the vehicle.

17. Assembly according to claim 16, wherein the bodywork part (4) is selected from a set comprising a front or rear window pillar, a rear view mirror, a roof, a tailgate, a rear spoiler, a wing, an external part surrounding the wheels such as a bumper or a wing extension.

18. Assembly according to one of claims 16 to 18, comprising several aerodynamic systems (1).
